# EUROPÄISCHE PATENTSCHRIFT

(11) **EP 1 416 266 B1**
(45) Veröffentlichungstag und Bekanntmachung des Hinweises auf die Patenterteilung: **27.09.2006**
(21) Anmeldenummer: 02024601.3
(22) Anmeldetag: 04.11.2002
(51) Int. Cl.: G01N 21/84

(54) **Verfahren zur Überprüfung der Struktur von Durchgangslöchern eines Bauteils**
Method for inspecting the structure of through-holes of a material
Procédé d' inspection de la structure de trous de passage d'un matériau

(43) Veröffentlichungstag der Anmeldung: 06.05.2004
(73) Patentinhaber: SIEMENS AKTIENGESELLSCHAFT, 80333 München (DE)
(72) Erfinder: Beyer, Roman, 12167 Berlin (DE)

(56) Entgegenhaltungen:
- EP-A- 0 854 005
- US-A- 4 644 162
- US-A- 4 873 414
- US-A- 5 054 087
- US-A- 5 111 046
- PATENT ABSTRACTS OF JAPAN vol. 015, no. 378 (M-1161), 24. September 1991 (1991-09-24) & JP 03 151501 A (MITSUBISHI HEAVY IND LTD), 27. Juni 1991 (1991-06-27)

## Beschreibung

Die Erfindung betrifft ein Verfahren zur Überprüfung der Struktur von Durchgangslöchern eines Bauteils gemäß dem Oberbegriff des Anspruchs 1.

Durchgangslöcher von Bauteilen, beispielsweise lasergebohrte, insbesondere Kühlluftlöcher von Gasturbinenschaufeln, weisen oft abweichend von der zylindrischen Form komplexe Geometrien auf. Der strömungswirksame Durchmesser des Lochs, die Lage des Lochs in der Wand des Bauteils, die Position als auch die Lage und der Versatz der Diffusoren (im Querschnitt erweiteter Ausströmbereich) dieser Löcher variieren aufgrund von z.B. Guß-, Laser- oder Erodierprozesstoleranzen bzw. der jeweiligen Herstellungsbedingungen.
Die Wirksamkeit der Kühlluftbohrungen auf dem Blattprofil der Turbinenschaufel ergibt sich aus dem komplexen Zusammenspiel dieser genannten Größen. Sie können bis zum heutigen Zeitpunkt nicht automatisiert und ohne größeren technischen Aufwand bestimmt bzw. vermessen werden.

Mit den herkömmlichen Verfahren wird über die Detektion von erwärmter Bauteiloberfläche die Durchgängigkeit von Bohrungen überprüft, d.h. wenn das Loch verstopft ist, wird sich keine Erwärmung des Materials am Bohrloch einstellen. Der Nachteil dieses Verfahrens besteht darin, dass eine geringe Öffnung (Teilverschluss der Bohrung) auch Luft durchlässt und das Material erwärmt. Im Thermographiebild sind teilverschlossene und offene Bohrungen kaum zu unterscheiden.

Sowohl die DE 35 33 186 A1 und die DE 197 20 461 A1 zeigen Thermografieverfahren, bei denen ein erwärmtes Gas durch die Kühlluftbohrungen hindurchgedrückt wird. Die Zufuhr von warmer Luft bedeutet ein erheblichen apparativen Aufwand. Das herkömmliche Thermografieverfahren erfasst die Temperaturverteilung auf der Bauteiloberfläche, die von der warmen Luft erhitzt wird. Aus den gewinnbaren Informationen sind aber keine Rückschlüsse auf die Bohrungsausführung zu ziehen.

Es ist daher Aufgabe der Erfindung dieses Problem zu überwinden.

Die Aufgabe wird gelöst durch ein Verfahren zur Überprüfung der Struktur von Durchgangslöchern eines Bauteils gemäß des Anspruchs 1.

In den Unteransprüchen sind weitere vorteilhafte Ausgestaltungen des Verfahrens aufgelistet.

Eine Strömungsvisualisierung von aus den Durchgangslöchern austretenden Gasfahnen mit Hilfe der erzeugten Kamerabilder und Bildanalyse liefert eine Vielzahl von Informationen zur Ausbildung und Lage der Durchgangslöcher und ermöglicht sowohl eine Prozesskontrolle als auch Designverifizierung.

Es zeigen
Figur 1 eine Vorrichtung, mit der das erfindungsgemäße Verfahren durchgeführt werden kann, und
Figur 2 ein Kamerabild, das mit dem erfindungsgemässen Verfahren aufgenommen wurde.

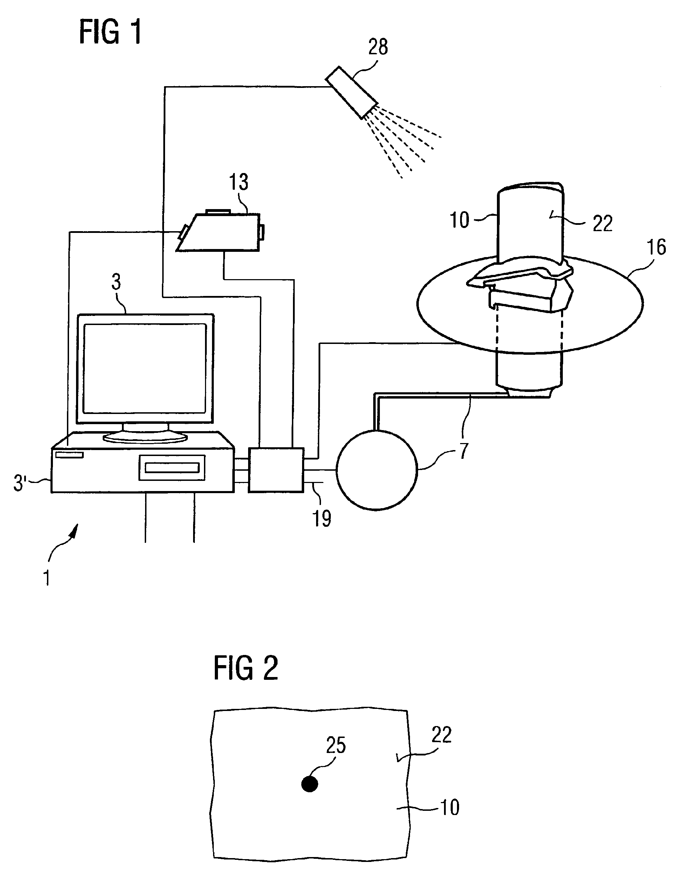

Die Vorrichtung 1 gemäss Figur 1 beinhaltet unter anderem einen Computer 3 mit Bildschirm, an den eine Kamera 13, beispielsweise eine Infrarotkamera 13, ggf. eine Beleuchtungsquelle 28 und weitere Steuerungselemente 19 angeschlossen sind.
Beispielsweise ist an dem Computer 3 auch eine Mediumzufuhr 7 angeschlossen, die den Fluss von einem Medium (Gas, Fluid) in das Innere des Bauteils 10 steuert.
Aus Durchgangslöchern 25 in der Oberfläche 22 (Fig. 2) des Bauteils 10 tritt dieses Medium am bspw. vorhandenen Diffusor dann wieder aus.

Das Bauteil 10, zumindest aber ein Durchgangsloch 25 wird mit der Bestrahlungsquelle 28 bestrahlt. Die Bestrahlungsquelle 28 weist einen bestimmten Wellenlängenbereich auf. Die Bestrahlungsquelle 28 kann auch das Umgebungslicht sein.
Die Strahlen der Bestrahlungsquelle 28 treffen auf die Oberfläche 22 des Bauteils 10 auf und werden dort reflektiert und absorbiert. Die reflektierten Strahlen werden von der Kamera 13 aufgenommen.
Das Medium weist im Bereich der von der Bestrahlungsquelle 28 verwendeten Wellenlänge(n) zumindest eine Absorptionslinie,kante oder -band auf.
Da im Bereich des Durchgangslochs 25 das Medium die Strahlen der Bestrahlungsquelle absorbiert, werden die Strahlen der Bestrahlungsquelle 28, die im Bereich des Durchgangslochs 25 auftreffen, also zumindest geschwächt und gelangen nicht oder geschwächt zu der Kamera 13.
Die Wellenlänge oder Wellenlängenbereich der Bestrahlungsquelle (28) ist also von der Kamera (13) erkennbar.

Die Oberfläche 22 des Bauteils 10 wird beispielsweise durch eine Infrarotkamera 13 aufgenommen.
Um die gesamte Oberfläche 22 zu vermessen, ist beispielsweise das Bauteil 10 auf einer Verstelleinheit 16 angeordnet, die bewegbar, beispielsweise drehbar ist. Ebenso kann das Bauteil 10 fest angeordnet sein und die Infrarotkamera 13 wird relativ zu der Oberfläche 22 des Bauteils 10 bewegt. Auch können Bauteil 10 und Verstelleinheit 16 in allen drei Raumrichtungen bewegbar sein.
Das Medium, beispielsweise ein Gas, absorbiert erfindungsgemäß im Bereich der verwendeten Wellenlänge (n) der Bestrahlungsquelle 28.
Das Medium ist z.B. Kohlendioxid (CO₂), das im Bereich der Wellenlänge von 3 - 5 µm eine Absorptionsbande hat. Die Bestrahlungsquelle 28 weist also zumindest eine Wellenlänge im Bereich 3 - 5 µm auf. Die Kamera kann zumindest diese eine Wellenlänge der Bestrahlungsquelle 28 erkennen.
Somit ist im Kamerabild dieses Gas als undurchsichtige Materie von der Umgebung zu unterscheiden. Das Gas CO₂ ist besonders gut geeignet, da es ähnliche fluiddynamische Eigenschaften wie Luft hat, die bspw. als Kühlmedium verwendet wird.
Die Auswertung des Kamerabildes an einzelnen Durchgangslöchern 25 führt zur Konzentrationsverteilung bzw. Ausbreitungsrichtung des aus dem Durchgangsloch 25 ausströmenden Mediums. Aus Konzentrationsverteilung bei sequentiellem Ausstoßen von CO₂-Wolken und Integration der Konzentrationswerte ist eine Bestimmung der Menge und somit der Durchflusskapazität des jeweiligen Bohrlochs möglich. Mit dieser Information können die Herstellungsparameter, beispielsweise der Laser- und Erodierprozesse, für einzelne Durchgangslöcher 22 optimal angepasst werden.

Die Beobachtung mittels Stereoperspektive bzw. die Variation des Beobachtungswinkels von Kamera 13 und Bauteil 10 ermöglicht die Bestimmung der dreidimensionalen Ausbreitung einer Mediumfahne über den Diffusor und den angrenzenden Außenprofilbereich. Hierdurch ergeben sich Möglichkeiten, beispielsweise numerische Modelle für die Strömungsverteilung am Durchgangsloch 22 und Diffusor zu verifizieren.

Im weiteren können durch die Analyse einer Gasfahne weitere Aussagen über Bohrungsdurchmesser und Auswirkungen der Lochgeometrie auf das Ausströmverhalten -als auch Austrittswinkel etc. getroffen werden.

Das strömende Medium kann dieselbe Temperatur wie das Bauteil 10 aufweisen, müss also nicht im Gegensatz zu den bisher bekannten Thermographiemethoden erwärmt werden.
Ebenso ist es aber möglich das Medium zu erwärmen, wenn durch die Erwärmung eine Absorptionsbande im verwendeten Wellenlängenbereich der Kamera 13 erreicht wird.
Auch warmes Gas oder Fluid kann das Durchgangsloch 25 durchströmen, um das Ausströmverhalten von warmen Gasen zu untersuchen. So strömt beispielsweise auch Gas mit einer Temperatur größer als Raumtemperatur während des Betriebs durch eine Kühlluftbohrung einer Turbinenschaufel.

Steuerungselemente 19 koordinieren beispielsweise die Bewegung von Kamera 13, Bestrahlungsquelle und Bauteil 10 sowie Mediumfluss 7 zueinander.

Figur 2 zeigt ein Kamerabild, das mit den erfindungsgemässen Verfahren aufgenommen wurde.
Auf der Oberfläche 22 des Bauteils mit dem Durchgangsloch 25 erscheint das ausströmende Medium bspw. schwarz gegenüber der deutlich heller erscheinenden Oberfläche.

Auch der Ausströmbereich des Gases nach dem Austritt aus dem Durchgangsloch 25 erscheint bspw. schwarz gegenüber der Umgebung.

### Bezugszeichenliste

- 1: Vorrichtung
- 3: Computer mit Bildschirm
- 7: Gaszufuhr
- 10: Bauteil
- 13: Infrarotkamera
- 16: Verstelleinheit
- 22: Oberfläche
- 25: Durchgangsloch

## Patentansprüche

1. Verfahren zur Überprüfung der Struktur von Durchgangslöchern eines Bauteils (10),
beim dem ein Medium durch das Durchgangsloch (25) ausströmt und währenddessen eine visuelle Aufnahme des Bauteils (10) durch eine Kamera (13) erfolgt,
**dadurch gekennzeichnet,**
**dass** das Bauteil (10) mit einer Bestrahlungsquelle (28) bestrahlt wird, und
**dass** das Medium bei zumindest einer Wellenlänge der Bestrahlungsquelle (28) zumindest eine Absorptionslinie oder Absorptionskante oder Absorptionsbande aufweist.

2. Verfahren nach Anspruch 1,
**dadurch gekennzeichnet, dass**
das Bauteil (10) eine Turbinenschaufel mit Kühllöchern als Durchgangslöcher ist.

3. Verfahren nach Anspruch 1,
**dadurch gekennzeichnet, dass**
als Medium gasförmiges Kohlendioxid verwendet wird.

4. Verfahren nach Anspruch 1,
**dadurch gekennzeichnet, dass**
die für die Kamera (13) erkennbare Wellenlänge den Wellenlängenbereich von 3 - 5 µm einschließt.

5. Verfahren nach Anspruch 1,
**dadurch gekennzeichnet, dass**
das Medium so ausgewählt wird,
dass ein Kamerabild im Bereich des Mediums undurchsichtig erscheint.

6. Verfahren nach Anspruch 1,
**dadurch gekennzeichnet, dass**
als Kamera (13) eine Infrarotkamera verwendet wird.

7. Verfahren nach Anspruch 1,
**dadurch gekennzeichnet, dass**
zumindest die Wellenlänge oder Wellenlängenbereich der Bestrahlungsquelle (28) von der Kamera (13) erkennbar ist.

## Claims

1. Method of checking the structure of through-holes of a component (10), in which a medium flows out through the through-hole (25) and during which a visual recording of the component (10) takes place by a camera (13), **characterized in that** the component (10) is irradiated by a source of irradiation (28), and **in that** the medium has at least an absorption line or absorption edge or absorption strip at at least one wavelength of the source of irradiation (28).

2. Method according to Claim 1, **characterized in that** the component (10) is a turbine blade with cooling holes as through-holes.

3. Method according to Claim 1, **characterized in that** gaseous carbon dioxide is used as the medium.

4. Method according to Claim 1, **characterized in that** the wavelength which can be detected by the camera (13) includes the wavelength range of from 3 - 5 µm.

5. Method according to Claim 1, **characterized in that** the medium is chosen such that a camera image in the region of the medium appears opaque.

6. Method according to Claim 1, **characterized in that** an infrared camera is used as the camera (13).

7. Method according to Claim 1, **characterized in that** at least the wavelength or wavelength range of the source of irradiation (28) can be detected by the camera (13).

## Revendications

1. Procédé d'inspection de la structure de trous de passage d'un élément (10), dans lequel on fait sortir un milieu par le trou (25) de passage et pendant cela on effectue une prise de vue de l'élément (10) par une caméra (13),
**caractérisé**
**en ce que** l'on expose l'élément (10) à une source (28) de rayonnement, et
**en ce que** le milieu a, pour au moins une longueur d'onde de la source (28) de rayonnement, au moins une raie d'absorption ou une arête d'absorption ou une bande d'absorption.

2. Procédé suivant la revendication 1, **caractérisé en ce que**
l'élément (10) est une aube de turbine ayant des trous de refroidissement comme trous de passage.

3. Procédé suivant la revendication 1, **caractérisé en ce que**
on utilise comme milieu du dioxyde de carbone gazeux.

4. Procédé suivant la revendication 1, **caractérisé en ce que**
les longueurs d'onde qui peuvent être détectées par la caméra (13) englobent le domaine de longueur d'onde de 3 à 5 µm.

5. Procédé suivant la revendication 1, **caractérisé en ce que**
on choisit le milieu de façon qu'une image par la caméra apparaisse non transparente dans la zone du milieu.

6. Procédé suivant la revendication 1, **caractérisé en ce que**
l'on utilise comme caméra (13) une caméra infrarouge.

7. Procédé suivant la revendication 1, **caractérisé en ce que**
au moins les longueurs d'onde ou le domaine de longueur d'onde de la source (28) de rayonnement peut être détectépar la caméra (13).
